# DEMANDE DE BREVET EUROPEEN

(11) **EP 4 659 701 A1**
(43) Date de publication de la demande: **10.12.2025**
(21) Numéro de dépôt: 25178109.2
(22) Date de dépôt: 22.05.2025
(51) Int. Cl.: A61C 7/10

(54) **DISJONCTEUR ORTHODONTIQUE AUTOMATIQUE**

(30) Priorité: 05.06.2024 FR 2405934
(71) Demandeur: Neo 3 D, 28630 Morancez (FR)
(72) Inventeur: Biezanek, Arnaud, 28320 Ymeray (FR)
(74) Mandataire: Lequien, Philippe

(57) **Abrégé**

L'invention concerne un disjoncteur (1) orthodontique comprenant :
- deux corps montés mobiles l'un par rapport à l'autre le long d'un axe d'expansion (10), chaque corps étant destiné à porter directement des bras de fixation (11) à des dents ;
- un ressort (4) tendant à écarter l'un de l'autre les deux corps le long de l'axe d'expansion (10).

## Description

### Domaine Technique

Le domaine de l'invention est celui de la conception et de la fabrication d'appareillages d'orthodontie.

L'invention concerne plus particulièrement un disjoncteur d'orthodontie.

### État de la technique

Les appareillages d'orthodontie sont constitués d'éléments mécaniques passifs et actifs, souvent noyés dans des résines pour les appareillages amovibles, ou soudés sur une armature métallique pour les appareillages fixes.

Ces appareillages peuvent mettre en œuvre des fils dont le rôle est de maintenir un appareil en bouche, de pousser, de déplacer, ou de maintenir en position une ou des dents.

Ces appareillages peuvent également mettre en œuvre des vérins ou des disjoncteurs pour déplacer une dent, un ensemble de dents, ou des parties osseuses.

Un disjoncteur orthodontique est classiquement utilisé pour élargir l'arcade maxillaire ou l'os mandibulaire. Le disjoncteur est conçu pour appliquer une contrainte croissante dans le but d'élargir une structure osseuse, tel que la suture intermaxillaire dans le cas d'un de l'os maxillaire.

Les disjoncteurs de type automatique mettent en œuvre des moyens de rappel élastique, tel que des systèmes à ressorts (à lames, hélicoïdaux, etc.) conçu pour tendre à écarter deux corps du disjoncteurs montés mobiles en translation l'un par rapport à l'autre.

Ces disjoncteurs sont aujourd'hui conçus pour s'ouvrir seuls sous l'action des ressorts, et sans intervention des patients ou des proches du patient. Toutefois, les modèles mis en œuvre actuellement présentent l'inconvénient de ne pas permettre la maîtrise de l'écartement souhaité. Ils sont en effet actifs jusqu'à une ouverture maximale limitée couramment à 6 mm et 9 mm, voire également à 3 mm sur des systèmes hybrides mettant en œuvre des vis en complément des ressorts.

De l'état de la technique, il est connu des systèmes permettant un réglage plus fin, mais moins aisé à régler, tel que celui décrit dans le document de brevet publié sous le numéro US3284902A, dans lequel des butées sont réglables à l'aide de pas de vis ménagés dans les corps du disjoncteur, et d'un axe portant des vis complémentaires des pas de vis et présentant deux butées contre lesquels les vis viennent en butée lorsque l'ouverture maximale du disjoncteur est atteinte.

Enfin, il est recherché à ce que les disjoncteurs soient aisés à réaliser, à mettre en oeuvre, et présente un coût de fabrication moindre.

### Problème technique

L'invention a notamment pour objectif de pallier les inconvénients précités, et de répondre aux besoins de l'art antérieur.

Plus précisément, l'invention a pour objectif de proposer un disjoncteur orthodontique qui permette un réglage fin et est aisé à réaliser de l'écartement à atteindre.

L'invention a également pour objectif de fournir un tel disjoncteur orthodontique qui soit simple à réaliser et à fabriquer.

L'invention a encore pour objet de fournir un tel disjoncteur orthodontique qui soit économique à fabriquer.

### Résumé de l'invention

Ces objectifs, ainsi que d'autres qui apparaîtront par la suite, sont atteints grâce à l'invention qui a pour objet un disjoncteur orthodontique comprenant :
- deux corps montés mobiles l'un par rapport à l'autre le long d'un axe d'expansion, chaque corps étant destiné à porter directement des bras de fixation à des dents ;
- un ressort tendant à écarter l'un de l'autre les deux corps le long de l'axe d'expansion ;

caractérisé en ce que l'un des deux corps forme un fourreau, et l'autre des deux corps forme un coulisseau mobile en translation dans le fourreau,
et en ce que :
   - l'un des deux corps présente une pluralité d'emplacements de couplage d'une butée répartis le long d'un axe de réglage s'étendant parallèlement à l'axe d'expansion, le disjoncteur comprenant au moins une butée apte à assumer une position de limitation dans l'un des emplacements de couplage ;
   - l'autre des deux corps présente une contre-butée positionnée pour venir en appui contre une butée en position de limitation lors d'une expansion des deux corps, l'autre des deux corps présentant une encoche longitudinale formant un moyen de guidage en translation, le disjoncteur présentant au moins un élément en saillie se logeant dans l'encoche longitudinale pour guider en translation le coulisseau dans le fourreau,
et en ce qu'au moins une butée forme l'élément en saillie se logeant dans l'encoche longitudinale dans une position de limitation dans l'un des emplacements de couplage, la contre butée étant formée par l'extrémité de la rainure longitudinale.

Le disjoncteur orthodontique selon l'invention permet de réaliser un réglage fin et est aisé à réaliser grâce à la ou les butées qui peuvent être couplé dans les emplacements de couplage qui sont répartis le long de l'axe de réglage. Il suffit en effet de mettre une butée en position de limitation pour qu'elle soit dans l'axe de la contre-butée. Lors de l'expansion, la contre - butée se rapproche de la butée en position de limitation, ouvert la première butée en position de limitation sur son chemin, et empêche toute expansion supplémentaire lorsqu'elle est en contact avec cette butée. Un réglage consiste alors à retirer cette butée, afin qu'une autre butée située plus loin définisse le nouvel écartement d'expansion maximale à atteindre, ou décale la butée jusqu'à l'emplacement de couplage correspondant au nouvel écartement d'expansion maximale à atteindre.

Le disjoncteur orthodontique selon l'invention présente également une conception particulièrement simple, aisé à fabriquer, et peu onéreuse.

En effet, comparativement au disjoncteur orthodontique selon l'art antérieur, le disjoncteur orthodontique selon l'invention met en oeuvre un nombre relativement limité d'éléments, et ces éléments sont simples à réaliser.

L'élément en saillie se logeant dans l'encoche longitudinale pour guider en translation le coulisseau dans le fourreau permet d'éviter une rotation du coulissant dans le fourreau autour de l'axe central du fourreau.

La butée formant l'élément en saillie logé dans l'encoche dans une position de limitation dans l'un des emplacements de couplage, permet de renforcer l'optimisation du disjoncteur en termes de simplicité de conception, d'utilisation et de fabrication.

Préférentiellement, le coulisseau est creux, et présente un logement de réception du ressort.

Le disjoncteur orthodontique présente ainsi un encombrement réduit, et une intégration optimisée du ressort.

Selon un mode de réalisation préféré, le coulisseau est cylindrique de révolution, le fourreau présentant préférentiellement une cavité cylindrique de révolution complémentaire en forme du coulisseau.

Ce mode de réalisation préféré est particulièrement simple à fabriquer, et ainsi peu onéreux.

Selon une solution envisagée, le coulisseau présente un élément externe en saillie formant un moyen de guidage en translation dans le fourreau.

Avantageusement, les emplacements de couplage correspondent à des trous, la ou chaque butée en position de limitation étant couplée dans un trou.

Il suffit ainsi de découpler une butée d'un emplacement de couplage afin qu'elle ne soit plus en position de limitation.

Selon une conception préférée, les butées sont frangibles.

Une butée doit ainsi être dégradée, par exemple par meulage, pour être découplée.

Dans ce cas, préférentiellement, la ou les butées présentent une tête en forme de calotte lisse.

Les butées ne présentent pas une forme susceptible de provoquer un inconfort pour la personne recevant le disjoncteur orthodontique, cette forme minimisant l'encrassement potentielle du disjoncteur orthodontique au niveau de la butée.

Selon un mode de réalisation préféré, le coulisseau présente sur une face externe une règle graduée s'étendant parallèlement à l'axe d'expansion.

L'expansion du disjoncteur est ainsi aisément mesurable.

### Brève description des dessins

D'autres caractéristiques et avantages de l'invention apparaîtront plus clairement à la lecture de la description suivante de différents modes de réalisation préférentiels de l'invention, donnés à titre d'exemples illustratifs et non limitatifs, et des dessins annexés parmi lesquels :
- la figure 1 est une représentation schématique en vue éclatée d'un disjoncteur orthodontique selon l'invention ;
- la figure 2 est une représentation schématique du disjoncteur orthodontique assemblé, à une distance d'expansion prédéterminée ;
- la figure 3 est une représentation schématique du disjoncteur orthodontique assemblé, à une distance nulle d'expansion ;
- la figure 4 est une représentation schématique d'une butée d'un disjoncteur selon l'invention ;
- la figure 5 est une représentation schématique illustrant l'implémentation d'un disjoncteur orthodontique selon l'invention.

### Description détaillée

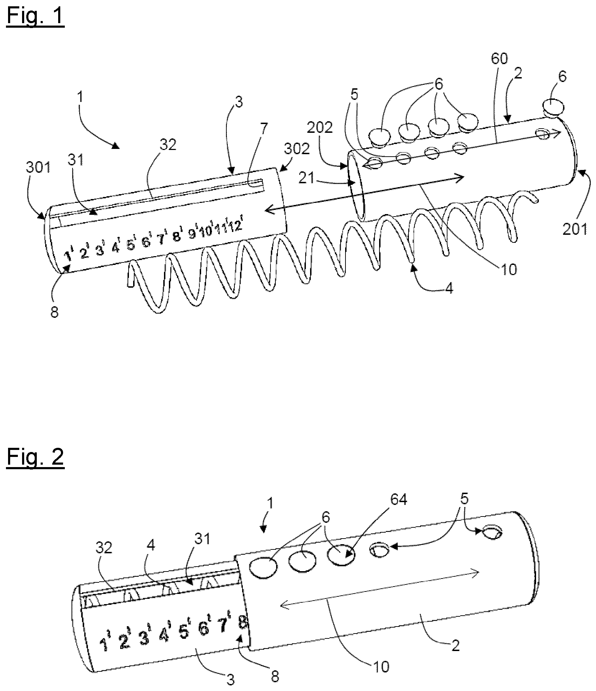

Tel que cela est visible sur les figures 1, 2, 3, et 5, un disjoncteur 1 orthodontique est représenté.

Ce disjoncteur 1 orthodontique comprend deux corps montés mobiles l'un par rapport à l'autre le long d'un axe d'expansion 10.

En d'autres termes, les deux corps sont mobiles en translation l'une par rapport à l'autre le long de l'axe d'expansion 10.

Tel que cela apparaît par la suite, selon le présent mode de réalisation, les deux corps ne sont pas mobiles en rotation l'un par rapport à l'autre autour d'un axe parallèle à l'axe d'expansion.

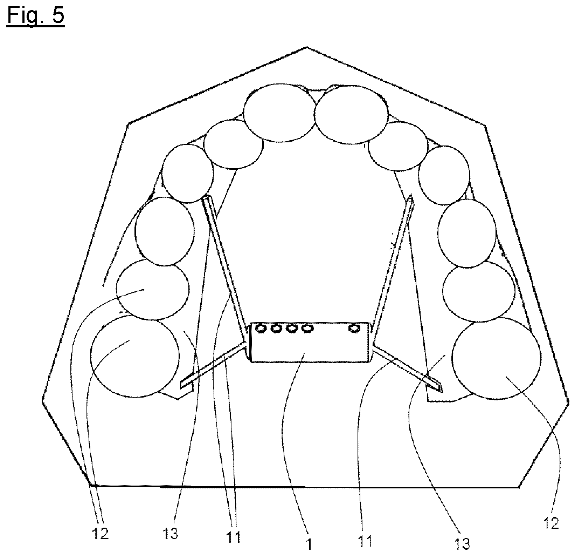

En référence plus spécifiquement à la figure 5, chaque corps est destiné à porter directement des bras de fixation 11 à des dents 12 (représentées schématiquement). L'appareillage illustré peut également comprend des moulages 13 en résine, solidaires des bras de fixation 11, et destinés à venir en appui contre les dents 12.

Tel que cela est visible sur les figures 1 et 2, le disjoncteur orthodontique comprend également un ressort 4 tendant à écarter l'un de l'autre les deux corps le long de l'axe d'expansion 10.

Ce ressort 4 est notamment un ressort hélicoïdal.

L'avantage d'un tel ressort réside dans sa facilité d'obtention (fabrication ou achat), et dans son économicité.

Toutefois d'autres types de ressorts sont envisageables.

Selon le présent mode de réalisation des figures 1 à 3, l'un des deux corps forme un fourreau 2, et l'autre des deux corps forme un coulisseau 3 mobile en translation dans le fourreau 2.

En effet, le fourreau 2 présente une cavité 21 conçue pour accueillir le coulisseau 3. Cette cavité 21 est complémentaire en forme du coulisseau 3.

Le fourreau 2 s'étend longitudinalement entre une première extrémité 201 et une seconde extrémité 202. La première extrémité 201 du fourreau 2 est fermée, tandis que la seconde extrémité 202 est ouverte pour permettre l'insertion du coulisseau 3 dans la cavité 21.

Le coulisseau 3 s'étend quant à lui longitudinalement entre une première extrémité 301, et une seconde extrémité 302. La première extrémité 301 du fourreau 3 est fermée.

Le coulisseau 3 présente ainsi un profil externe transversal complémentaire en forme du profil transversal de la cavité 21.

Plus précisément, selon le présent mode de réalisation, le coulisseau 3 est cylindrique de révolution.

Toujours selon le présent mode de réalisation, la cavité 21 est également cylindrique de révolution.

Il est envisageable que le coulisseau 3, et ainsi également la cavité 21, assument une forme cylindrique qui ne soit pas de révolution.

Bien entendu, la forme cylindrique de la cavité 21, et celle du coulisseau 3 s'étendent longitudinalement parallèlement à l'axe d'expansion 10.

Le fourreau 2, selon le présent mode de réalisation, présente une forme externe cylindrique de révolution. Une telle forme est aisée et peu couteuse à réaliser.

Toutefois, d'autres formes externes sont envisageables, notamment pour rendre le disjoncteur orthodontique plus agréable à porter par un patient.

Le disjoncteur 1 orthodontique présente des moyens de guidage en translation des deux corps l'un par rapport à l'autre.

Selon le présent mode de réalisation, l'un des deux corps présente une encoche longitudinale 32 formant un moyen de guidage en translation, et le disjoncteur 1 présente au moins un élément en saillie se logeant dans l'encoche longitudinale 32 pour guider en translation le coulisseau 3 dans le fourreau 2.

L'encoche longitudinale 32 s'étend parallèlement à l'axe d'expansion 10.

Tel que cela est visible sur les figures, l'encoche longitudinale 32 est présentée par le coulisseau 3.

Tel que cela est détaillé par la suite, l'élément en saillie se logeant dans l'encoche longitudinale est formé par une butée 6 portée par le fourreau 2, et plus spécifiquement par une butée 6 en position de limitation.

Il est envisageable un mode de réalisation dans lequel l'encoche longitudinale 32 serait présentée par le fourreau 2. Dans ce cas l'élément en saillie serait porté par le coulisseau 3 à l'extérieur.

Dans un autre mode de réalisation envisageable, le moyen de guidage en translation peut être formé par le profil externe transversal du coulisseau 3, et par la forme du profil transversal de la cavité 21. Une forme carrée, par exemple, grâce à l'un de ses angles, permet de limiter toute rotation du coulisseau 3 par rapport au fourreau 2.

Toujours selon le présent mode de réalisation, le coulisseau 3 est creux, et présente un logement de réception 31 du ressort 4.

Ce logement de réception 31 est notamment cylindrique de révolution. Ceci est particulièrement adapté à la réception d'un ressort hélicoïdal.

La seconde extrémité 302 du coulisseau 3 est ouverte pour permettre l'insertion du ressort 4 dans le logement de réception 31, ainsi que pour permettre l'extension et la compression du ressort 4 entre le fond de la cavité 21, située au voisinage de la première extrémité 201 du fourreau 2, et le fond du logement de réception 31, situé au voisinage de la première extrémité 301 du coulisseau 3

Tel que cela est visible sur les figures 1 et 2, l'encoche longitudinale 32 est débouchante, et communique ainsi sur toute sa longueur dans le logement de réception 31.

Il est toutefois envisagé un mode de réalisation dans lequel cette encoche longitudinale 32 serait borgne et ne communiquerait pas avec le logement de réception 31.

Dans le mode de réalisation envisagé où l'encoche longitudinale 32 serait présentée par le fourreau 2, et en conséquence sur une face interne de la cavité 21, il est également envisageable que l'encoche longitudinale 32 soit débouchante, ou qu'elle soit borgne. Dans le cas où elle serait borgne, et tel que cela apparaît par la suite, l'élément en saillie se logeant dans l'encoche longitudinale n'est alors pas forme par la butée 6, mais par exemple par un doigt distinct d'une butée 6.

En référence aux figures 1 à 4, l'un des deux corps présente une pluralité d'emplacements de couplage 5 d'une butée 6 répartis le long d'un axe de réglage 60 s'étendant parallèlement à l'axe d'expansion 10, tandis que l'autre des deux corps présente une contre-butée 7 positionnée pour venir en appui contre une butée 6 en position de limitation lors d'une expansion des deux corps.

En effet, le disjoncteur 1 orthodontique comprend au moins une butée 6 apte à assumer une position de limitation dans l'un des emplacements de couplage 5.

Selon le présent mode de réalisation, le disjoncteur 1 orthodontique présente en l'occurrence une pluralité de butées 6.

Ces butées 6 sont préférentiellement amovibles. C'est-à-dire qu'une butée 6 peut être installée et désinstallée d'un emplacement de couplage 5.

Il est envisageable que le disjoncteur 1 ne comprenne qu'une unique butée 6 à déplacer le long de l'axe de réglage 60.

Selon un mode de réalisation envisageable, la ou les butées 6 sont frangibles. De cette manière, une butée 6 peut être retirer par un praticien en étant dégradée. Par exemple, un praticien peut meuler une butée 6 afin de la retirer.

Une butée 6 peut par exemple être réalisée en plastique.

Selon le présent mode de réalisation, les emplacements de couplage 5 correspondent à des trous 51, et chaque butée 6 en position de limitation est couplée dans l'un des trous 51.

Les emplacements de couplage 5 sont situés le long de l'axe de réglage 60 tel que cela est explicité représenté sur la figure 1. En l'occurrence, le disjoncteur comprend quatre emplacements de couplage 5 régulièrement espacés les uns des autres et s'étendant depuis la seconde extrémité 202 du fourreau 2, ainsi qu'un dernier emplacement de couplage 5 situé au voisinage de la première extrémité du fourreau 2.

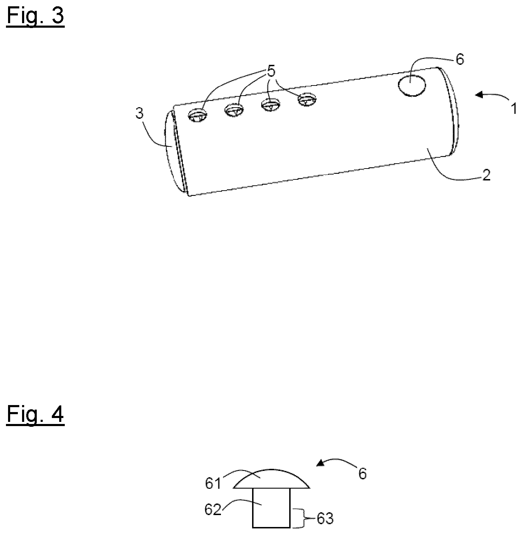

En référence plus spécifiquement à la figure 4, ces butées 6 prennent notamment la forme de plots.

Une butée 6 présente notamment, une tête 61, et une tige 62 s'étendant de la tête 61.

Les butées 6 présentent une symétrie de révolution autour d'un axe central.

La tête 61 présente une forme de calotte lisse. La calotte lisse présente sa partie arrondie à l'opposée de la tige 62.

Quand une butée 6 est enfoncée dans un trou 51, et est ainsi dans une position de limitation, une partie émergeante 63 fait saillie du côté opposé du trou, par rapport à la tête. Cette partie émergeante 63 est alors susceptible de venir au contact de la contre-butée 7.

En alternative envisageable, les butées 6 peuvent être vissés dans des trous taraudés.

Selon le présent mode de réalisation, en référence à la figure 1, la contre-butée 7 est présentée par le coulisseau 3. En effet, la contre-butée 7 est forme par l'extrémité de la rainure longitudinale 32, et plus spécifiquement par le matériau du coulisseau 3 situé à l'extrémité de la rainure longitudinale 32.

Une butée 6 en position de limitation présente sa partie émergeante 63 dans le volume de la rainure longitudinale 32, et est ainsi susceptible de venir au contact de la contre-butée 7 mais aussi de participer au guidage en translation du coulisseau 3 dans le fourreau 2. La ou les butées 6 en position de limitation dans les emplacements de couplage 5 forment ainsi des éléments en saillie se logeant dans l'encoche longitudinale 32.

En référence aux figures 1 et 2, le coulisseau 3 présente sur une face externe une règle graduée 8 s'étendant parallèlement à l'axe d'expansion 10.

Cette règle graduée 8 permet de connaitre le degré d'expansion atteint par le disjoncteur orthodontique. Un repère numérique émerge de la seconde extrémité 202 du fourreau 2 lors de l'expansion du disjoncteur 1.

Cette règle graduée 8 s'étend avantageusement parallèlement à la rainure longitudinale 32, sur la quasi-intégralité de la longueur de la rainure longitudinale 32.

En référence plus spécifiquement à la figure 2, les deux emplacements de couplage 5 situés à droite de la figure sont libres d'une butée 6. Tandis que les trois autres emplacements de couplage 5 présentent chacun une butée 6 en position de limitation.

La première butée 6 depuis la droite de la figure 2, peut être qualifiée de butée active 64. En effet, cette butée active 64 empêche toute expansion supplémentaire du disjoncteur 1 du fait qu'elle est en contact avec la contre-butée 7. La distance d'expansion maximale correspond alors à la valeur « 8 ».

Si une expansion supplémentaire est nécessaire, il est alors nécessaire de retirer cette butée active 64, afin de la suivante devienne opérante.

Il est envisageable qu'un disjoncteur 1 orthodontique présente deux, ou plus, axes de réglages 60, chaque axe de réglage 60 présentant alors sa propre série d'emplacements de couplage 5. Chaque axe de réglage présente alors des emplacements de couplage qui sont décalés des emplacements de couplage de l'autre ou des autres axes de réglage. Ainsi, il est possible de diminuer l'intervalle entre deux emplacements de couplage le long de l'axe d'expansion 10, afin de permettre un réglage plus fin de la limite d'expansion souhaitée.

En référence à la figure 3, le disjoncteur 1 orthodontique est dans un état totalement comprimé, et est maintenu dans cet état par la seule butée 6 insérée dans le trou formant le dernier emplacement de couplage 5 situé au voisinage de la première extrémité 201 du fourreau 2. Cette butée et ce dernier emplacement de couplage 5 sont utilisée notamment lors de la mise en bouche du disjoncteur 1, préalablement à son activation par le biais du retrait de cette butée 6.

## Revendications

1. Disjoncteur (1) orthodontique comprenant :
- deux corps montés mobiles l'un par rapport à l'autre le long d'un axe d'expansion (10), chaque corps étant destiné à porter directement des bras de fixation (11) à des dents ;
- un ressort (4) tendant à écarter l'un de l'autre les deux corps le long de l'axe d'expansion (10) ;
**caractérisé en ce que** l'un des deux corps forme un fourreau (2), et l'autre des deux corps forme un coulisseau (3) mobile en translation dans le fourreau (2),
et **en ce que** :
- l'un des deux corps présente une pluralité d'emplacements de couplage (5) d'une butée (6) répartis le long d'un axe de réglage (60) s'étendant parallèlement à l'axe d'expansion (10), le disjoncteur (1) comprenant au moins une butée (6) apte à assumer une position de limitation dans l'un des emplacements de couplage (5) ;
- l'autre des deux corps présente une contre-butée (7) positionnée pour venir en appui contre une butée (6) en position de limitation lors d'une expansion des deux corps, l'autre des deux corps présentant une encoche longitudinale (32) formant un moyen de guidage en translation, le disjoncteur (1) présentant au moins un élément en saillie se logeant dans l'encoche longitudinale (32) pour guider en translation le coulisseau (3) dans le fourreau (2),
et **en ce qu'**au moins une butée (6) forme l'élément en saillie se logeant dans l'encoche longitudinale (32) dans une position de limitation dans l'un des emplacements de couplage (5), la contre butée (7) étant formée par l'extrémité de la rainure longitudinale (32).

2. Disjoncteur (1) orthodontique selon la revendication précédente, **caractérisé en ce que** le coulisseau (3) est creux, et présente un logement de réception (31) du ressort (4).

3. Disjoncteur (1) orthodontique selon l'une quelconque des revendications précédentes, **caractérisé en ce que** le coulisseau (3) est cylindrique de révolution, le fourreau (2) présentant préférentiellement une cavité (21) cylindrique de révolution complémentaire en forme du coulisseau (3).

4. Disjoncteur (1) orthodontique selon l'une quelconque des revendications 1 et 2, **caractérisé en ce que** le coulisseau (3) présente un élément externe en saillie formant un moyen de guidage en translation dans le fourreau (2).

5. Disjoncteur (1) orthodontique selon l'une quelconque des revendications précédentes, **caractérisé en ce que** les emplacements de couplage (5) correspondent à des trous (51), la ou chaque butée (6) en position de limitation étant couplée dans un trou (51).

6. Disjoncteur (1) orthodontique selon l'une quelconque des revendications précédentes, **caractérisé en ce que** les butées (6) sont frangibles.

7. Disjoncteur (1) orthodontique selon les revendications 5 et 6, **caractérisé en ce que** la ou les butées (6) présentent une tête (61) en forme de calotte lisse.

8. Disjoncteur (1) orthodontique selon l'une quelconque des revendications précédentes, **caractérisé en ce que** le coulisseau (3) présente sur une face externe une règle graduée (8) s'étendant parallèlement à l'axe d'expansion (10).
